# EUROPEAN PATENT APPLICATION

(11) **EP 1 763 178 A2**
(43) Date of publication of application: **14.03.2007**
(21) Application number: 06120267.7
(22) Date of filing: 07.09.2006
(51) Int. Cl.: H04L 12/28

(54) **A method of verifying integrity of an access point on a wireless network**

(30) Priority: 13.09.2005 GB 0518641
(71) Applicant: ROKE MANOR RESEARCH LIMITED, Romsey, Hampshire SO51 0ZN (GB)
(72) Inventor: Davis, Simon Paul, Romsey, Hampshire SO51 7LX (GB); Phillips, Ian Lasseter, Romsey, Hampshire SO51 8PN (GB)
(74) Representative: Payne, Janice Julia

(57) **Abstract**

A method of verifying integrity of an access point (7) on a wireless network (3) comprises registering an access point with a core network, allocating a unique identifier from the network to the access point; recording data including the unique identifier (ID=3) together with a geographical location of the access point; requesting reports relating to access points (2, 6, 7) in the vicinity of a mobile terminal (1) when the mobile terminal sends other data, including the unique identifier as determined by mobile terminals listening to wireless transmissions from said access points, to the core network; and checking data in the reports against recorded data to determine if an access point is genuine

## Description

This invention relates to a method of verifying integrity of an access point on a wireless network.

There are security issues relating to wireless mobile networking in that a mobile core network may be accessed through a corporate network for which it does not have control of the access points, but once a user has access to the corporate network from their mobile terminal, the connections give that terminal access to the core network. The access points for the corporate network may not be of an approved type, they may have been stolen and repositioned, or they may be rogues, not operated by that corporate network at all, just appearing to be. In addition, the core network needs to know what resources are available and where in order to manage the resources efficiently.

In accordance with the present invention, a method of verifying integrity of an access point on a wireless network comprises registering an access point with a core network, allocating a unique identifier from the network to the access point; recording data including the unique identifier together with a geographical location of the access point; requesting reports relating to access points in the vicinity of a mobile terminal when the mobile terminal sends other data, including the unique identifier as determined by mobile terminals listening to wireless transmissions from said access points, to the core network; and checking data in the reports against recorded data to determine if an access point is genuine.

The present invention makes use of data which can be communicated by a mobile terminal in the course of its normal transmissions to determine whether an access point near to the mobile terminal is genuine or not. The mobile terminal does not need to be pre-registered, but simply observe and report to the core network, a unique identifier of a wireless access point. If the radio transmissions observed by the mobile terminal includes a unique identifier which is not correctly registered, then the network knows that it needs to check out that access point.

Preferably, the recorded data includes whether an access point is authorised to be operating in the vicinity of the mobile terminal.

This allows a check for whether an otherwise genuine access point, whose unique identifier is registered, has been moved to a non-authorised location and so may still be deemed to be a rogue access point.

In one embodiment, a mobile terminal adds geographical location information to reports from neighbouring access points for transmission to the core network.

This requires the mobile terminal to have information about its geographical location, such as a built-in GPS device.

In an alternative embodiment, location data is implied from historic data in the mobile terminal.

This is more suitable for simpler types of mobile terminal.

Preferably, the historic data comprises a list of recent neighbour access points visited or measured by the mobile terminal.

Alternatively, location data is implied from location data in other neighbouring access points which have already been verified.

Preferably, the access point is registered with a controller of the core network.

Preferably, the controller comprises an authentication, authorisation and accounting server.

Preferably, the core network comprises one of a wireless local area network, a mobile communication system and a second or third generation mobile cellular system where the access point can share public, private or corporate communication infrastructure.

Preferably, the mobile terminal is one of a mobile telephone, a personal digital assistant, or a personal computer. Other types of terminal, such as multimedia entertainment terminals or gateway units on transport, such as trains, aircraft or ships may also provide location data.

Preferably, any access point which is not successfully verified is disconnected from the core network, has its identifier barred from handover or has downlink traffic stopped.

An example of a method of verifying integrity of an access point on a wireless network in accordance with the present invention will now be described with reference to the accompanying drawing in which:

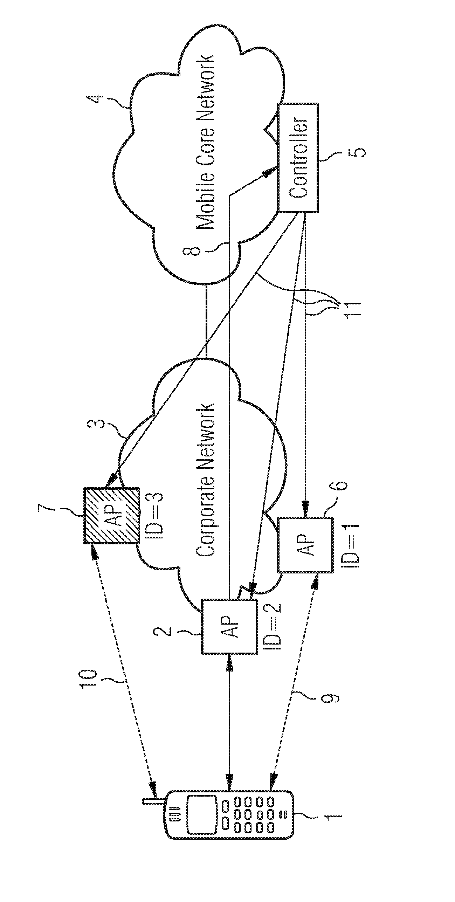

Figure 1 is a block diagram illustrating the verification method of the present invention.

An example wireless access network scenario is shown in Fig.1. The invention is applicable to mobile communications using any wireless technology where the purchase, placement and movement of wireless Access Points (APs) is outside of the control of the operator and for example, can include technologies such as WLAN and 3G in the case of small portable node Bs (sometimes known as piconode Bs).

In Fig. 1 a mobile terminal 1 connects through an access point (AP) 2 to a corporate network 3. The corporate network connects into a mobile core network 4. There is a controller 5 in the mobile core network 4 which can communicate directly 11 with each AP, however, it also wishes to verify the APs to ensure that there are no security concerns, such as a rogue, stolen, or non-approved AP being operated. In addition, the network operator wishes to know where the APs are located in order to manage both radio resources and network resources. Location information of APs is valuable in support of location based services, especially in the support of emergency calls and lawful intercept.

In the method of the present invention, co-operation of mobile devices is required in order to deal with the security concerns. When the AP is purchased legitimately, it registers securely with the operator and provides registration data including a location area, of a size to be determined by the operator, for example anything within a 1Km range; and a unique AP identity (ID).

Referring to Fig. 1, the mobile device 1 connects to the AP 2 which has the ID=2 and the mobile device reports 8 some information about neighbouring APs 6, 7 (ID=1 and ID=3 respectively) to the controller 5, in this case a mobile network node. The information which the mobile device 1 reports includes some or all of the following data: the ID of a neighbour AP, as seen 9, 10 on the air interface as part of normal neighbour measurement, a list of recent neighbour APs visited or measured, i.e. the operational history of the mobile device and location information gathered via existing location methods, such as GPS.

The controller is able to authenticate whether a particular AP 7 (ID=3) is registered with the operator and whether it is operating in the geographical area in which it was registered. If AP 7 is found not to be correctly registered or in the correct location, then the network can take action such as trying to disable the rogue AP, stopping downlink (DL) traffic to the rogue AP, and barring the ID from being handed over by neighbouring APs, using the direct links 11 to each AP.

A considerable advantage of the method of the present invention is that authentication of the AP is achieved via the co-operation of all mobile devices via communications through other APs, even those in different areas if historic information is taken into account. It provides a mechanism for the detection of rogue or unauthorised Access Points (APs) based on location information supplied by mobile devices enabling the mobile core network to detect such APs and take action to minimise any loss of service to mobile subscribers whilst isolating the offending AP. The core network knows where a registered access point should be geographically and multiple mobile terminals observe the access point by wireless measurement, without having to use that access point, then report, via radio messages, decoded identifiers of the access points. There is no need to determine whether or not the mobile devices are genuine, as the chances of every one of the mobile devices which detect a particular access point not being genuine is small. The core network correlates all reports from mobile devices over time against the registered location for that access point to determine whether or not it is genuine.

## Claims

1. A method of verifying integrity of an access point on a wireless network, the method comprising registering an access point with a core network, allocating a unique identifier from the network to the access point; recording data including the unique identifier together with a geographical location of the access point; requesting reports relating to access points in the vicinity of a mobile terminal when the mobile terminal sends other data, including the unique identifier as determined by mobile terminals listening to wireless transmissions from said access points, to the core network; and checking data in the reports against recorded data to determine if an access point is genuine

2. A method according to claim 1, wherein the recorded data includes whether an access point is authorised to be operating in the vicinity of the mobile terminal.

3. A method according to claim 1 or claim 2, wherein a mobile terminal adds geographical location information to reports from neighbouring access points for transmission to the core network.

4. A method according to claim 1 or claim 2, wherein location data is implied from historic data in the mobile terminal.

5. A method according to claim 4, wherein the historic data comprises a list of recent neighbour access points visited or measured by the mobile terminal.

6. A method according to claim 1 or claim 2, wherein location data is implied from location data in other neighbouring access points which have already been verified.

7. A method according to any preceding claim, wherein the access point is registered with a controller of the core network.

8. A method according to claim 7, wherein the controller comprises an authentication, authorisation and accounting server.

9. A method according to any preceding claim, wherein the core network comprises one of a wireless local area network, a mobile communication system and a second or third generation mobile cellular system where the access point can share public, private or corporate communication infrastructure.

10. A method according to any preceding claim, wherein the mobile terminal is one of a mobile telephone, a personal digital assistant, or a personal computer.

11. A method according to any preceding claim, wherein any access point which is not successfully verified is disconnected from the core network, has its identifier barred from handover or has downlink traffic stopped.
